(19) Europäisches Patentamt / European Patent Office / Office européen des brevets

(11) **EP 3 760 777 B1**

(12) **EUROPEAN PATENT SPECIFICATION**

(45) Date of publication and mention
of the grant of the patent:
**18.01.2023  Bulletin 2023/03**

(21) Application number: **19760438.2**

(22) Date of filing: **15.02.2019**

(51) International Patent Classification (IPC):
*D04H 3/007* $^{(2012.01)}$      *B01D 39/16* $^{(2006.01)}$

(52) Cooperative Patent Classification (CPC):
**D04H 1/4291; B01D 39/1623; D04H 3/007;**
B01D 2239/025; B01D 2239/1216;
B01D 2239/1233; B01D 2239/1258;
B01D 2239/1291

(86) International application number:
**PCT/JP2019/005661**

(87) International publication number:
**WO 2019/167683 (06.09.2019 Gazette 2019/36)**

(54) **NONWOVEN FABRIC AND FILTER**

VLIESSTOFF UND FILTER

TISSU NON-TISSÉ, ET FILTRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2018   JP 2018035814**

(43) Date of publication of application:
**06.01.2021   Bulletin 2021/01**

(73) Proprietor: **Zeon Corporation
Tokyo 100-8246 (JP)**

(72) Inventor: **MIYAZAWA, Shinsuke
Tokyo 100-8246 (JP)**

(74) Representative: **Maiwald GmbH
Elisenhof
Elisenstraße 3
80335 München (DE)**

(56) References cited:
EP-A1- 3 061 854        EP-A1- 3 640 378
EP-A1- 3 666 948        WO-A1-2012/014501
WO-A1-2015/060242       JP-A- H06 240 511
JP-A- 2002 180 325      JP-A- 2003 504 523
JP-A- 2005 171 404      JP-A- 2009 148 748
JP-A- 2011 256 490      US-A1- 2011 259 818
US-B1- 6 927 184

**Description**

TECHNICAL FIELD

This disclosure relates to non-woven fabrics and filters.

BACKGROUND

Cycloolefin polymers (COPs) are used in a wide range of fields such as optical materials, automotive parts, and electric and electronic components, as materials in which, for example, heat resistance, low water absorption, and low dielectric property are well-balanced. In addition, excellent properties of cycloolefin polymers have attracted attention, and their applications in fibers and non-woven fabrics have been proposed. For example, it has been considered to produce non-woven fabrics with fibers excellent in heat resistance, chemical stability, and strength by melt-spinning a cycloolefin resin having properties such as a high content of cycloolefin units and a high glass transition temperature, without drawing or with drawing at a low draw ratio (see, for example, JP2005-171404A (PTL 1)).

CITATION LIST

Patent Literature

PTL 1: JP2005-171404A

SUMMARY

(Technical Problem)

In recent years, there are demands for efficiently collecting fine particles generated in, for example, the production process of semiconductor devices such as semiconductor chips.
In this respect, the non-woven fabric described in PTL 1 is not sufficient when used as a filter to collect fine particles since there is room for further improvement in terms of increased pressure loss and the need to replace the filter in a short time in order to improve the collection efficiency.
It would thus be helpful to provide a non-woven fabric that can provide a filter capable of achieving a high collection rate, low pressure loss, and long-term use, and a filter comprising the non-woven fabric.

(Solution to Problem)

To advantageously solve the above problems, the present disclosure provides a non-woven fabric made of fibers containing an alicyclic structure-containing resin as a crystalline cycloolefin polymer, wherein the non-woven fabric has a pore diameter as measured by a bubble point method of 5 $\mu$m or less. In this way, when a non-woven fabric is made of fibers containing a crystalline alicyclic structure-containing resin and has a pore diameter as measured by a bubble point method of 5 $\mu$m or less, the non-woven fabric can provide a filter capable of achieving a high collection rate, low pressure loss, and long-term use.
As used herein, the term "crystalline alicyclic structure-containing resin" refers to an "alicyclic structure-containing resin having a melting point Tm (i.e., an alicyclic structure-containing resin whose melting point can be observed by differential scanning calorimeter (DSC))". The "melting point of the crystalline alicyclic structure-containing resin" can be measured by a differential scanning calorimetry method according to JIS-K7121.
In addition, the "presence or absence of crystallinity" can be judged by the presence or absence of a melting point, and if a resin has a melting point, it has crystallinity.
Furthermore, the "pore diameter as measured by a bubble point method" means a maximum pore diameter $D_{BP}$ (in $\mu$m) calculated using the following formula (1) based on the pressure at which bubbles are first generated from a pore with the maximum pore diameter in a non-woven fabric immersed in a liquid (e.g., isopropyl alcohol) as the gas pressure is increased (namely, the bubble point pressure):

$$D_{BP} = (4\gamma\cos\theta/P) \times 10^{-6} \qquad (1),$$

where $\gamma$ represents the surface tension of the liquid (N/m), $\theta$ represents the contact angle between the liquid and the non-woven fabric (rad), and P represents the bubble point pressure (Pa).

In the non-woven fabric disclosed herein, the crystalline alicyclic structure-containing resin is preferably a hydrogenated dicyclopentadiene ring-opened polymer with stereoregularity. If the crystalline alicyclic structure-containing resin is a hydrogenated dicyclopentadiene ring-opened polymer with stereoregularity, it is possible to more reliably provide a filter capable of achieving a high collection rate, low pressure loss, and long-term use.

To advantageously solve the above problems, the filter disclosed herein may comprise any of the above-described non-woven fabrics. The filter comprising any of the above-described non-woven fabrics can achieve a high collection rate, low pressure loss, and long-term use.

It is preferable that the filter disclosed herein is a filter for semiconductor device production used in production of semiconductor devices. With a filter for semiconductor element production used in production of semiconductor devices, it is possible to efficiently collect fine particles generated in, for example, the production process of semiconductor devices such as semiconductor chips.

(Advantageous Effect)

According to the present disclosure, it is possible to provide a non-woven fabric that can provide a filter capable of achieving a high collection rate, low pressure loss, and long-term use, and a filter comprising the non-woven fabric.

DETAILED DESCRIPTION

The following provides a detailed description of embodiments of the present disclosure. The non-woven fabric and the filter disclosed herein can be suitably used for efficiently collecting fine particles generated in, for example, the production process of semiconductor devices such as semiconductor chips.

(Non-woven Fabric)

The non-woven fabric disclosed herein is made of fibers containing a crystalline alicyclic structure-containing resin. The non-woven fabric disclosed herein has a pore diameter as measured by a bubble point method of 5 μm or less.

<Crystalline Alicyclic Structure-containing Resin>

As used herein, the term "crystalline alicyclic structure-containing resin" refers to a polymer that is obtained by polymerizing a cycloolefin and that has an alicyclic structure in the molecule and has crystallinity. Hereinafter, a crystalline alicyclic structure-containing resin may also be referred to as a "polymer (α)". As used herein, the phrase "polymer has crystallinity" and other similar expressions are intended to mean a polymer for which a melting point is detected by measurement in accordance with the differential scanning calorimetry (DSC) method prescribed in JIS-K7121. Note that the "crystallinity" of a polymer is intended to mean an inherent property of a polymer having a certain structure that can be given as a result of the polymer chain having stereoregularity.

-Polymer (α)-

The polymer (α) is not particularly limited, and is preferably a hydride of a norbornene-based ring-opened polymer. More specifically, the polymer (α) may be a known polymer such as a hydrogenated dicyclopentadiene ring-opened polymer with syndiotactic stereoregularity as described in WO2012/033076A, a hydrogenated dicyclopentadiene ring-opened polymer with isotactic stereoregularity as described in JP2002-249553A, or a hydrogenated norbornene ring-opened polymer as described in JP2007-16102A. If the polymer (α) is a hydrogenated norbornene-based ring-opened polymer, the chemical resistance can be improved.

The melting point of the polymer (α) is not particularly limited, yet it is preferably 110 °C or higher, more preferably 200 °C or higher, still more preferably 220 °C or higher, and particularly preferably 250 °C or higher, and is preferably 350 °C or lower, more preferably 320 °C or lower, still more preferably 300 °C or lower, and particularly preferably 270 °C or lower.

The use of a polymer (α) having a melting point equal to or higher than the above lower limit may provide fibers excellent in heat resistance. Also, the use of a polymer (α) having a melting point equal to or lower than the above upper limit enables efficient production of fibers.

The glass-transition temperature of the polymer (α) is not particularly limited, yet it is preferably 85 °C or higher, more preferably 87 °C or higher, still more preferably 90 °C or higher, and particularly preferably 95 °C or higher, and is preferably 170 °C or lower, more preferably 150 °C or lower, still more preferably 130 °C or lower, and particularly preferably 105 °C or lower.

The use of a polymer (α) having a glass-transition temperature equal to or higher than the above lower limit may provide a non-woven fabric excellent in heat resistance. Also, the use of a polymer (α) having a glass-transition temperature equal to or lower than the above upper limit may provide a non-woven fabric excellent in formability.

Among them, the polymer (α) is preferably a hydrogenated dicyclopentadiene ring-opened polymer with syndiotactic stereoregularity (hereinafter also referred to as a "polymer (α1)") because such polymer (α1) facilitates preparation of a non-woven fabric that can provide a filter capable of achieving a high collection rate, low pressure loss, and long-term use. As used herein, the term "hydrogenated dicyclopentadiene ring-opened polymer" refers to a hydride of a ring-opened polymer containing a monomer unit derived from dicyclopentadienes. Further, the percentage content of the monomer unit derived from dicyclopentadienes in the hydrogenated dicyclopentadiene ring-opened polymer is preferably more than 90 mass%, and more preferably more than 95 mass%, where the amount of the hydrogenated dicyclopentadiene ring-opened polymer as a whole is taken to be 100 mass%.

Although no particular limit is placed on the degree of stereoregularity of the polymer (α1), polymers having a higher degree of stereoregularity are preferred as the polymer (α1) because such polymers facilitate preparation of fibers having high heat resistance and chemical resistance.

Specifically, the proportion of racemo diads (a meso/racemo ratio) for a repeating unit obtained by ring-opening polymerization of dicyclopentadiene to form a ring-opened polymer and hydrogenation of the ring-opened polymer is preferably 51 % or more, more preferably 60 % or more, even more preferably 65 % or more, particularly preferably 70 % or more, and most preferably 80 % or more.

The higher the proportion of racemo diads, i.e., the higher the syndiotactic stereoregularity, the higher melting point the hydrogenated dicyclopentadiene ring-opened polymer has.

The proportion of racemo diads can be determined based on the $^{13}$C-NMR spectral analysis as described in the EXAMPLES section.

The polymer (α1) can be prepared by carrying out ring-opening polymerization using a monomer composition containing dicyclopentadienes such as dicyclopentadiene, methyldicyclopentadiene, and 5,6-dihydrodicyclopentadiene (hereinafter, also referred to as a "monomer composition (α1)") to obtain a ring-opened polymer, followed by hydrogenation of at least some of the unsaturated bonds present in the obtained ring-opened polymer. The percentage content of dicyclopentadienes is preferably more than 90 mass%, more preferably more than 95 mass%, and particularly preferably 100 mass%, where the amount of all monomers contained in the monomer composition (α1) is taken to be 100 mass%. Note that monomers other than dicyclopentadienes that can be contained in the monomer composition (α1) are not particularly limited as long as they can be copolymerized with dicyclopentadienes, and examples thereof include norbornenes, cycloolefins, and dienes other than dicyclopentadienes.

In addition, the dicyclopentadienes include stereoisomers of endo isomers and exo isomers. As the dicyclopentadienes contained in the monomer composition (α1), either endo isomers or exo isomers may be used. The dicyclopentadienes may contain only one of endo isomers and exo isomers. Alternatively, as the dicyclopentadienes, a stereoisomeric mixture in which endo isomers and exo isomers are mixed in an arbitrary ratio may be contained in the monomer composition (α1). Of these, from the viewpoint of improving heat resistance and chemical resistance of the resulting semiconductor container, it is preferable that either endo isomers or exo isomers constitute a proportion as a main component of the dicyclopentadienes. In other words, when the content of all dicyclopentadienes contained in the monomer composition (α1) is taken to be 100 mass%, it is preferable that the proportion of either endo isomers or exo isomers is more than 50 mass%. Further, the proportion of stereoisomers as a main component of the dicyclopentadienes contained in the monomer composition (α1) is preferably 80 mass% or more, more preferably 90 mass% or more, still more preferably 95 mass% or more, and particularly preferably 97 mass% or more. Since endo isomers are more easily synthesized than exo isomers in the dicyclopentadienes, it is preferable that the proportion of endo isomers is higher than that of exo isomers in the dicyclopentadienes contained in the monomer composition (α1).

The ring-opening polymerization catalyst used in synthesizing the polymer (α) is not particularly limited as long as it allows for ring-opening polymerization of the dicyclopentadienes to obtain a ring-opened polymer with syndiotactic stereoregularity. Examples of preferred ring-opening polymerization catalysts include catalysts that contain a metal compound represented by:

$$M(NR^1)X_{4-a}(OR^2)a \cdot L_b \qquad (1).$$

In formula (1), M represents a metal atom selected from the transition metal atoms in group 6 of the periodic table, $R^1$ represents a phenyl group optionally having a substituent in at least one of 3-, 4-, and 5-positions or a group represented by -$CH_2R^3$ (where $R^3$ represents a hydrogen atom, an alkyl group optionally having a substituent, or an aryl group optionally having a substituent), $R^2$ represents a group selected from an alkyl group optionally having a substituent and an aryl group optionally having a substituent, X represents a group selected from a halogen atom, an alkyl group optionally having a substituent, an aryl group optionally having a substituent, and an alkylsilyl group, and L represents an electron-donating neutral ligand. Also, a represents 0 or 1, and b represents an integer from 0 to 2.

M represents a transition metal atom (chromium, molybdenum, or tungsten) in group 6 of the periodic table;

among these preferred are molybdenum and tungsten, and more preferred is tungsten.

The carbon number of the phenyl group of $R^1$ optionally having a substituent in at least one of 3-, 4-, and 5-positions is not particularly limited, yet it is preferably 6 or more, and is preferably 20 or less and more preferably 15 or less.

Examples of the substituent include: an alkyl group such as a methyl group and an ethyl group; a halogen atom such as a fluorine atom, a chlorine atom, and a bromine atom; and an alkoxy group such as a methoxy group, an ethoxy group, and an isopropoxy group.

In addition, such substituents present in at least two of 3-, 4-, and 5-positions may bind together to form a ring structure.

Examples of the phenyl group optionally having a substituent in at least one of 3-, 4-, and 5-positions include: an unsubstituted phenyl group; a mono-substituted phenyl group such as a 4-methylphenyl group, a 4-chlorophenyl group, a 3-methoxyphenyl group, a 4-cyclohexylphenyl group, and a 4-methoxyphenyl group; a di-substituted phenyl group such as a 3,5-dimethylphenyl group, a 3,5-dichlorophenyl group, a 3,4-dimethylphenyl group, and a 3,5-dimethoxyphenyl group; a tri-substituted phenyl group such as a 3,4,5-trimethylphenyl group and a 3,4,5-trichlorophenyl group; and a 2-naphthyl group optionally having a substituent such as a 2-naphthyl group, a 3-methyl-2-naphthyl group, and a 4-methyl-2-naphthyl group.

In the group represented by -$CH_2R^3$ of $R^1$, $R^3$ represents a hydrogen atom or a group selected from an alkyl group optionally having a substituent and an aryl group optionally having a substituent.

The carbon number of the alkyl group optionally having a substituent in $R^3$ is not particularly limited, yet it is preferably 1 or more, and is preferably 20 or less, more preferably 10 or less, and particularly preferably 4 or less. This alkyl group may be linear or branched.

Examples of the substituent include: a phenyl group and a phenyl group optionally having a substituent such as a 4-methylphenyl group; and an alkoxyl group such as a methoxy group and an ethoxy group.

Examples of the alkyl group optionally having a substituent in $R^3$ include a methyl group, an ethyl group, a propyl group, an isopropyl group, an n-butyl group, an isobutyl group, a t-butyl group, a pentyl group, a neopentyl group, a benzyl group, and a neophyl group.

The carbon number of the aryl group optionally having a substituent in $R^3$ is not particularly limited, yet it is preferably 6 or more, and is preferably 20 or less and more preferably 15 or less.

Examples of the substituent include: an alkyl group such as a methyl group and an ethyl group; a halogen atom such as a fluorine atom, a chlorine atom, and a bromine atom; and an alkoxy group such as a methoxy group, an ethoxy group, and an isopropoxy group.

Examples of the aryl group optionally having a substituent in $R^3$ include a phenyl group, a 1-naphthyl group, a 2-naphthyl group, a 4-methylphenyl group, and a 2,6-dimethlphenyl group.

Of these, a $C_1$-$C_{20}$ alkyl group is preferred as the group represented by $R^3$.

Examples of the halogen atom in X include a chlorine atom, a bromine atom, and an iodine atom

Examples of the alkyl group optionally having a substituent and the aryl group optionally having a substituent in X include the same as those listed above for the alkyl group optionally having a substituent and the aryl group optionally having a substituent, respectively, in $R^3$.

Examples of the alkylsilyl group in X include a trimethylsilyl group, a triethylsilyl group, and a t-butyldimethylsilyl group.

In addition, when the metal compound represented by formula (1) has 2 or more Xs, the Xs may bind together to form a ring structure.

Examples of the alkyl group optionally having a substituent and the aryl group optionally having a substituent in $R^2$ include the same as those listed above for the alkyl group optionally having a substituent and the aryl group optionally having a substituent, respectively, in $R^3$.

Examples of the electron-donating neutral ligand in L include an electron-donating ligand containing atoms in group 15 or 16 of the periodic table. Specific examples thereof include phosphines such as trimethylphosphine, triisopropylphosphine, tricyclohexylphosphine, and triphenylphosphine; ethers such as diethyl ether, dibutyl ether, 1,2-dimethoxyethane, and tetrahydrofuran; and amines such as trimethylamine, triethylamine, pyridine, and lutidine. Of these, ethers are preferred.

As the metal compound represented by formula (1), a tungsten compound having a phenylimide group (a compound in which M is a tungsten atom and $R^1$ is a phenyl group in formula (1)) is preferred, and a tetrachlorotungsten phenylimide (tetrahydrofuran) complex is more preferred.

The method for synthesizing the metal compound represented by formula (1) is not particularly limited, and examples thereof include the method described in JPH5-345817A. In other words, a target metal compound can be synthesized by mixing an oxyhalide, which is a transition metal in group 6, phenylisocyanates optionally having a substituent in at least one of 3-, 4-, and 5-positions or mono-substituted methyl isocyanates, an electron-donating neutral ligand (L), and optionally alcohols, a metal alkoxide, and a metal aryl oxide.

After synthesis of the metal compound, the reaction liquid may be directly used as a catalyst liquid for a ring-opening polymerization reaction, or may undergo a known purification treatment such as crystallization to isolate and purity the metal compound and then subject the metal compound to a ring-opening polymerization reaction.

The ring-opening polymerization catalyst may consist only of the metal compound represented by formula (1) or may be a combination of the metal compound represented by formula (1) and an organometallic reducing agent. The use of a combination of the metal compound represented by formula (1) and an organometallic reducing agent improves the polymerization activity.

Examples of the organometallic reducing agent include organometallic compounds in groups 1, 2, 12, 13, and 14 of the periodic table having a Ci to $C_{20}$ hydrocarbon group.

Examples of organometallic compounds include: organolithium such as methyllithium, n-butyllithium, and phenyllithium; organomagnesium such as butyl ethyl magnesium, butyl octyl magnesium, dihexyl magnesium, ethyl magnesium chloride, n-butyl magnesium chloride, and allyl magnesium bromide; organozinc such as dimethyl zinc, diethyl zinc, and diphenyl zinc; organoaluminum such as trimethyl aluminum, triethyl aluminum, triisobutyl aluminum, diethyl aluminum chloride, ethyl aluminum sesquichloride, ethyl aluminum dichloride, diethyl aluminum ethoxide, diisobutyl aluminum isobutoxide, ethyl aluminum diethoxide, and isobutyl aluminum diisobutoxide; and organotin such as tetramethyltin, tetra(n-butyl)tin, and tetraphenyltin.

Of these, organoaluminum or organotin is preferred.

A ring-opening polymerization reaction is usually carried out in an organic solvent. The organic solvent used is not particularly limited as long as it is capable of dissolving or dispersing a ring-opened polymer or a hydride thereof under a predetermined condition and does not inhibit a ring-opening polymerization reaction or a hydrogenation reaction.

Examples of the organic solvent include: aliphatic hydrocarbons such as pentane, hexane, and heptane; alicyclic hydrocarbons such as cyclopentane; cyclohexane; methylcyclohexane, dimethylcyclohexane, trimethylcyclohexane, ethylcyclohexane, diethylcyclohexane, decahydronaphthalene, bicycloheptane, tricyclodecane, hexahydroindene, and cyclooctane; aromatic hydrocarbons such as benzene, toluene, and xylene; halogenated aliphatic hydrocarbons such as dichloromethane, chloroform, and 1,2-dichloroethane; halogenated aromatic hydrocarbons such as chlorobenzene and dichlorobenzene; nitrogen-containing hydrocarbons such as nitromethane, nitrobenzene, and acetonitrile; ethers such as diethyl ether and tetrahydrofuran; and mixed solvents thereof.

Of these, preferred organic solvents are aromatic hydrocarbons, aliphatic hydrocarbons, alicyclic hydrocarbons, and ethers.

A ring-opening polymerization reaction can be initiated by mixing a monomer, the metal compound represented by formula (1), and optionally an organometallic reducing agent. The order in which these components are added is not particularly limited. For example, a solution containing the metal compound represented by formula (1) and an organometallic reducing agent may be added and mixed into a solution containing a monomer, or a solution containing a monomer and the metal compound represented by formula (1) may be added and mixed into a solution containing an organometallic reducing agent, or a solution of the metal compound represented by formula (1) may be added and mixed into a solution containing a monomer and an organometallic reducing agent.

When each component is added, the total amount of each component may be added at a time or may be added in a plurality of times. It may also be added continuously over a relatively long period of time (e.g., 1 minutes or more)

The concentration of the monomer at the start of a ring-opening polymerization reaction is not particularly limited, yet it is preferably 1 mass% or more, more preferably 2 mass% or more, particularly preferably 3 mass% or more, and is preferably 50 mass% or less, more preferably 45 mass% or less, and particularly preferably 40 mass% or less. If the concentration of the monomer is excessively low, productivity may decrease, and if the concentration of the monomer is excessively high, the solution viscosity after a ring-opening polymerization reaction may be excessively high, making the subsequent hydrogenation reaction difficult.

The amount of the metal compound represented by formula (1) used in a ring-opening polymerization reaction is preferably an amount in which the molar ratio of (metal compound/monomer) is from 1:100 to 1:2,000,000, more preferably from 1:500 to 1:1,000,000, and particularly preferably from 1:1000 to 1:500,000. If the amount of the metal compound is excessively large, it may be difficult to remove the metal compound after the reaction, and if the amount of the metal compound is excessively small, it may not be possible to obtain a sufficient polymerization activity.

When an organometallic reducing agent is used, the amount used is preferably 0.1 mol or more, more preferably 0.2 mol or more, and particularly preferably 0.5 mol or more, and is preferably 100 mol or less, more preferably 50 mol or less, and particularly preferably 20 mol or less, relative to 1 mol of the metal compound represented by formula (1). If the amount of the organometallic reducing agent used is excessively small, polymerization activity may not be sufficiently improved, and if the amount of the organometallic reducing agent used is excessively large, side reactions may easily occur.

An activity modifier may be added to the polymerization reaction system. By using an activity modifier, it is possible to stabilize the ring-opening polymerization catalyst or to adjust the reaction rate of the ring-opening polymerization reaction and the molecular weight distribution of the polymer.

The activity modifier is not particularly limited as long as it is an organic compound having a functional group. Examples of the activity modifier include an oxygen-containing compound, a nitrogen-containing compound, and a phosphorus-containing compound.

Examples of the oxygen-containing compound include: ethers such as diethyl ether, diisopropyl ether, dibutyl ether, anisole, furan, and tetrahydrofuran; ketones such as acetone, benzophenone, and cyclohexanone; and esters such as ethyl acetate.

Examples of the nitrogen-containing compound include: nitriles such as acetonitrile and benzonitrile; amines such as triethylamine, triisopropylamine, quinuclidine, and N,N-diethylaniline; and pyridines such as pyridine, 2,4-lutidine, 2,6-lutidine, and 2-t-butylpyridine.

Examples of the phosphorus-containing compound include: phosphines such as triphenylphosphine, tricyclohexylphosphine, triphenylphosphate, and trimethylphosphate; and phosphine oxides such as triphenylphosphine oxide. One of such activity modifiers may be used individually, or two or more of such activity modifiers may be used in combination. The addition amount of the activity modifier is not particularly limited, yet may be usually selected between 0.01 mol% or more and 100 mol% or less relative to the metal compound represented by formula (1).

To the polymerization-reaction system, a molecular weight modifier may be added to adjust the molecular weight of the ring-opened polymer. Examples of the molecular weight modifier include: $\alpha$ olefins such as 1-butene, 1-pentene, 1-hexene, and 1-octene; aromatic vinyl compounds such as styrene and vinyl toluene; oxygen-containing vinyl compounds such as ethyl vinyl ether, isobutyl vinyl ether, allyl glycidyl ether, allyl acetate, allyl alcohol, and glycidyl methacrylate; halogen-containing vinyl compounds such as allyl chloride; nitrogen-containing vinyl compounds such as acrylamide; non-conjugated dienes such as 1,4-pentadiene, 1,4 hexadiene, 1,5-hexadiene, 1,6-heptadiene, 2-methyl-1,4 pentadiene, and 2,5-dimethyl-1,5-hexadiene; and conjugated dienes such as 1,3- butadiene, 2-methyl-1,3-butadiene, 2,3-dimethyl-1,3-butadiene, 1, 3-pentadiene, and 1,3-hexadiene.

One of such molecular weight modifiers may be used individually, or two or more of such molecular weight modifiers may be used in combination. The amount of the molecular weight modifier added may be appropriately determined depending on the target molecular weight, yet is usually selected in the range of 0.1 mol% to 50 mol% relative to the amount of dicyclopentadiene.

The polymerization temperature is not particularly limited, yet it is preferably -78 °C or higher and more preferably -30 °C or higher, and is preferably +200 °C or lower and more preferably +180 °C or lower. The polymerization time is not particularly limited and is also dependent on the reaction scale, yet it is usually in the range of 1 minute or more and 1000 hours or less.

The weight-average molecular weight (Mw) of the ring-opened polymer is not particularly limited, yet it is preferably 1,000 or more, more preferably 2,000 or more, and more preferably 10,000 or more, and is preferably 1,000,000 or less, more preferably 500,000 or less, and particularly preferably 100,000 or less. By subjecting the ring-opened polymer having such a weight-average molecular weight to a hydrogenation reaction, it is possible to obtain a polymer ($\alpha$1) in which, for example, formability and workability are well-balanced with chemical resistance. The weight-average molecular weight of the ring-opened polymer can be adjusted by adjusting, for example, the amount of the molecular weight modifier to be added at the time of polymerization.

The molecular weight distribution (Mw/Mn) of the ring-opened polymer is not particularly limited, yet it is usually 1.0 or more and preferably 1.5 or more, and is preferably 4.0 or less and more preferably 3.5 or less. By subjecting the ring-opened polymer having such a molecular weight distribution to a hydrogenation reaction, it is possible to obtain a polymer ($\alpha$1) having excellent formability and workability. The molecular weight distribution of the ring-opened polymer can be adjusted by the way monomers are added during the polymerization process and by the concentration of monomers.

The weight-average molecular weight (Mw) and molecular weight distribution (Mw/Mn) of the ring-opened polymer are values in terms of polystyrene measured by gel permeation chromatography (GPC) using tetrahydrofuran as a developing solvent.

Through the aforementioned ring-opening polymerization, it is possible to obtain a dicyclopentadiene ring-opened polymer with syndiotactic stereoregularity. If the reaction conditions are set appropriately in a hydrogenation reaction following the ring-opening polymerization reaction, the tacticity of the ring-opened polymer will not normally change after subjection to the hydrogenation reaction. Thus, by subjecting such a dicyclopentadiene ring-opened polymer with syndiotactic stereoregularity to a hydrogenation reaction, a desired polymer ($\alpha$1) can be obtained. Note that the degree of syndiotactic stereoregularity of the ring-opened polymer can be adjusted by selecting, for example, the type or amount of a ring-opening polymerization catalyst used. For example, as the amount of the ring-opening polymerization catalyst used is reduced, the syndiotactic stereoregularity tends to be higher.

A hydrogenation reaction of the ring-opened polymer can be carried out by supplying hydrogen into the reaction system in the presence of a hydrogenation catalyst. The hydrogenation catalyst may be a homogeneous or heterogeneous catalyst known as a hydrogenation catalyst of olefin compounds.

Examples of the homogeneous catalyst include: a catalyst made of a combination of a transition metal compound and an organic aluminum compound such as acetic acid cobalt/triethyl aluminum and nickel acetylacetonate/triisobutyl aluminum; a catalyst made of a combination of a transition metal compound and an organoalkalimetal compound such as titanocene dichloride/n-butyl lithium and zirconocene dichloride/sec-butyl lithium; a catalyst made of a combination of a transition metal compound and an organomagnesium compound such as tetrabutoxytitanate/dimethylmagnesium; and a precious metal complex catalyst such as dichlorobis(triphenylphosphine)palladium, chlorohydridocarbonyltris(triphenylphosphine)ruthenium, chlorohydridocarbonylbis(tricyclohexylphosphine)ruthenium, bis(tricyclohexylphosphine)benzylidine ruthenium(IV) dichloride, and chlorotris(triphenylphosphine)rhodium.

Examples of the heterogeneous catalyst include: a metal catalyst such as nickel, palladium, platinum, rhodium, and ruthenium; and a solid catalyst such as nickel/silica, nickel/diatomaceous earth, nickel/alumina, palladium/carbon, palladium/silica, palladium/diatomaceous earth, and palladium/alumina in which the metal is supported by a carrier such as carbon, silica, diatomaceous earth, alumina, and titanium oxide.

Hydrogenation reaction is usually performed in an inert organic solvent. Examples of the inert organic solvent include: aromatic hydrocarbons such as benzene and toluene; aliphatic hydrocarbons such as pentane and hexane; alicyclic hydrocarbons such as cyclohexane and decahydronaphthalene; and ethers such as tetrahydrofuran and ethylene glycol dimethyl ether.

The inert organic solvent may be the same as or different from any of those used in the ring-opening polymerization reaction. Alternatively, a hydrogenation reaction may be carried out by adding a hydrogenation catalyst directly to a ring-opening polymerization reaction liquid.

Although the reaction conditions of a hydrogenation reaction also vary depending on the hydrogenation catalyst used, the reaction temperature is preferably -20 °C or higher, more preferably -10 °C or higher, and particularly preferably 0 °C or higher, and is preferably +250 °C or lower, more preferably +220 °C or lower, and particularly preferably +200 °C or lower. If the reaction temperature is excessively low, the reaction rate may become too slow, and if the reaction temperature is excessively high, side-reactions may occur.

The hydrogen pressure is preferably 0.01 MPa or more, more preferably 0.05 MPa or more, and particularly preferably 0.1 MPa or more, and is preferably 20 MPa or less, more preferably 15 MPa or less, and particularly preferably 10 MPa or less. If the hydrogen pressure is excessively low, the reaction rate may become too slow, and if the hydrogen pressure is excessively high, a special device such as a high-pressure-resistant reactor is required.

The reaction time is not particularly limited as long as the desired percent hydrogenation is achieved, yet it is usually 0.1 hours or more and 10 hours or less.

After the hydrogenation reaction, the desired polymer ($\alpha$1) may be collected according to a conventional method. Further, the collected polymer ($\alpha$1) may be subjected to a dry treatment according to a conventional method.

The percent hydrogenation in the hydrogenation reaction (i.e., the proportion of hydrogenated unsaturated bonds) is not particularly limited, yet it is preferably 98 % or more and more preferably 99% or more. The higher the percent hydrogenation, the better the heat resistance of the polymer ($\alpha$1). Note that the percent hydrogenation can be measured by $^1$H-NMR.

In the present disclosure, the polymer ($\alpha$) may be one type used individually, or may be two or more types used in combination.

<Fibers>

There is no particular limitation on the fibers as long as they contain a crystalline alicyclic structure-containing resin as described above. However, it is preferable that the fibers contain 50 mass% or more of such a crystalline alicyclic structure-containing resin, and it is more preferable that the fibers contain 100 mass% of such a crystalline alicyclic structure-containing resin, i.e., the fibers consist only of such a crystalline alicyclic structure-containing resin.

[Number-average Fiber Diameter]

The number-average fiber diameter is not particularly limited, yet it is preferably 1 nm or more, more preferably 5 nm or more, and particularly preferably 10 nm or more, and is preferably 10 $\mu$m or less, more preferably 7 $\mu$m or less, and particularly preferably 5 $\mu$m or less.

The use of a non-woven fabric made of fibers having a number-average fiber diameter equal to or larger than the above lower limit may improve workability. Further, the use of a non-woven fabric made of fibers having a number-average fiber diameter equal to or smaller than the above upper limit enables production of a filter having a high collection rate.

Note that the "number-average fiber diameter" can be measured by the method described in the EXAMPLES section below.

The following provides the details of the "pore diameter of the non-woven fabric", "surface area of the non-woven fabric", and "air permeability of the non-woven fabric".

<Pore Diameter of the Non-woven Fabric>

The pore diameter of the non-woven fabric is not particularly limited as long as it is 5 $\mu$m or less, yet it is preferably 0.1 $\mu$m or more, more preferably 0.5 $\mu$m or more, and particularly preferably 0.8 $\mu$m or more, and is preferably 4.9 $\mu$m or less, more preferably 4.8 $\mu$m or less, and particularly preferably 4.7 $\mu$m or less.

The use of the non-woven fabric having a pore diameter equal to or larger than the above lower limit enables production of a filter with less pressure loss. Further, the use of the non-woven fabric having a pore diameter equal to or smaller than the above upper limit enables production of a filter having a high collection rate.

As used herein, the "pore diameter of the non-woven fabric" means a "pore diameter as measured by a bubble point method", or a maximum pore diameter $D_{BP}$ (in $\mu$m) calculated using the following formula (1) based on the pressure at which bubbles are first generated from a pore with the maximum pore diameter in the non-woven fabric immersed in a liquid (e.g., isopropyl alcohol) as the gas pressure is increased (namely, the bubble point pressure):

$$D_{BP} = (4\gamma\cos\theta/P) \times 10^{-6} \qquad (1),$$

where $\gamma$ represents the surface tension of the liquid (N/m), $\theta$ represents the contact angle between the liquid and the non-woven fabric (rad), and P represents the bubble point pressure (Pa).

<Surface Area of the Non-woven Fabric>

The surface area of the non-woven fabric is not particularly limited, yet it is preferably 0.5 mm$^2$/g or more, more preferably 0.7 mm$^2$/g or more, and particularly preferably 0.9 mm$^2$/g or more, and is preferably 20 mm$^2$/g or less, more preferably 15 mm$^2$/g or less, and particularly preferably 12 mm$^2$/g or less.

The use of the non-woven fabric having a surface area equal to or larger than the above lower limit enables the production of a filter having a high collection rate. Further, the use of the non-woven fabric having a surface area equal to or smaller than the above upper limit may improve workability. As used herein, the "surface area of the non-woven fabric" means the "surface area per 1 g of the non-woven fabric" and is measured with a specific surface area measurement device (MONOSORB, produced by Quantachrome Corporation).

In a filter comprising the non-woven fabric, the surface area of the non-woven fabric tends to become smaller as the pore diameter of the non-woven fabric increases. However, when the surface area of the non-woven fabric is excessively small, the load applied at the beginning of liquid flow becomes so large that the fibers in the non-woven fabric are damaged, and early replacement of the non-woven fabric in the filter may be needed. However, when the surface area of the non-woven fabric is within the above preferable range, early replacement of the non-woven fabric in the filter can be avoided.

<Air Permeability of the Non-woven Fabric>

The air permeability of the non-woven fabric is not particularly limited, yet it is preferably 1.0 (s/1000 mL) or more, more preferably 2.0 (s/1000 mL) or more, and particularly preferably 3.0 (s/1000 mL) or more, where s stands for seconds.

The use of the non-woven fabric having an air permeability equal to or higher than the above lower limit enables production of a filter having a high collection rate.

Note that the "air permeability of the non-woven fabric" can be measured by the method described in the EXAMPLES section below.

(Filter)

The filter disclosed herein comprises the non-woven fabric according to the present disclosure, examples of which include a non-woven fabric processed into a pleated form and placed in a cartridge according to a known method as described in JPS60-58208A.

<Pleats>

The number of folds in the pleats is not particularly limited, yet it is preferably 10 or more, and is preferably 1000 or less.

By appropriately adjusting the number of folds in the pleats, it is possible to adjust, for example, (i) the ease of placement in the cartridge, and (ii) the contact area between the non-woven fabric and the liquid.

<Cartridge>

The cartridge is not particularly limited, and may be, for example, a known cartridge as described in JPS60-58208A.

The following provides the details of the "collection rate of the filter", "pressure loss of the filter", and "replacement interval of the non-woven fabric in the filter".

<Collection Rate>

The collection rate of the filter is not particularly limited, yet it is preferably 95 % or more, more preferably 96 % or more, particularly preferably 97 % or more, and most preferably 100 %.

The use of the non-woven fabric having a collection rate equal to or higher than the above lower limit enables efficient particle collection.

Note that the "collection rate" can be measured by the method described in the EXAMPLES section below.

<Pressure Loss>

The pressure loss of the filter is not particularly limited, yet it is preferably 10 kPa or less, more preferably 9.8 kPa or less, even more preferably 9.6 kPa or less, and most preferably 0 kPa.

The use of the non-woven fabric with pressure loss as small as or lower than the above upper limit may suppress clogging of the non-woven fabric.

Note that the "pressure loss" can be measured by the method described in the EXAMPLES section below.

<Replacement Interval>

The replacement interval of the non-woven fabric in the filter is not particularly limited, yet it is preferably 200 minutes or more, more preferably 240 minutes or more, and particularly preferably 260 minutes or more.

The use of the non-woven fabric in which the replacement interval is equal to or longer than the above lower limit may suppress clogging of the non-woven fabric and enables efficient particle collection.

Note that the "replacement interval" can be measured by the method described in the EXAMPLES section below.

In addition, the filter disclosed herein is suitably used as a filter for semiconductor device production used in production of semiconductor devices such as semiconductor chips.

<Filters for Semiconductor Device Production>

The filter for semiconductor device production is used, for example, for removing fine particles (particles) as impurities in a chemical solution or the like used in production of semiconductor devices such as semiconductor chips.

It is noted here that the particle diameter of fine particles (particles) as impurities contained in a chemical solution or the like used in the semiconductor production process is usually 100 nm or less. However, when these particles agglomerate to form secondary particles, the particle diameter is about 1 $\mu$m. In this respect, the use of the filter comprising the non-woven fabric according to the present disclosure (having a pore diameter as measured by a bubble point method of 5 $\mu$m or less) enables collection of secondary particles having a particle diameter of about 1 $\mu$m as described above.

EXAMPLES

The following provides a more specific description of the present disclosure based on examples. However, the present disclosure is not limited to the following examples. In the following, "%" and "parts" used to express quantities are by mass, unless otherwise specified. Moreover, in the case of a polymer that is produced through copolymerization of different types of monomers, the proportion of a monomer unit in the polymer that is formed through polymerization of a given monomer is normally, unless otherwise specified, equivalent to the ratio (charging ratio) of the given monomer among all monomers used in polymerization of the polymer.

The following methods were used to perform measurements of various physical properties in the examples and comparative examples.

Measurements of various physical properties were performed as follows.

(1) Molecular Weight (Weight-average Molecular Weight and Number-average Molecular Weight) of Ring-opened Polymers

Solutions containing various ring-opened polymers produced were collected and used as measurement samples. For each obtained measurement sample, the molecular weight of the ring-opened polymer was determined as a value in terms of polystyrene using an H-type column (produced by Tosoh Corporation) in a gel permeation chromatography (GPC) system HLC-8320 (produced by Tosoh Corporation) at a temperature of 40 °C in tetrahydrofuran as the solvent.

(2) Percent Hydrogenation (Hydrogenation Rate) of Alicyclic Structure-containing Resins

Alicyclic structure-containing resins (A) and (B) were used as measurement samples.

The percent hydrogenation of the alicyclic structure-containing resin (A) was determined by $^1$H-NMR measurement using orthodichlorobenzene-d$^4$ as the solvent at 145 °C.

The percent hydrogenation of the alicyclic structure-containing resin (B) was determined by $^1$H-NMR measurement using deuterated chloroform as the solvent at 23 °C.

(3) Proportion of Racemo Diads in Alicyclic Structure-containing Resins

The alicyclic structure-containing resins (A) and (B) were used as measurement samples. Orthodichlorobenzene-d$_4$/1,2,4-trichlorobenzene (TCB)-d$_3$ (a mixing ratio by mass: 1/2) was used as the solvent, and $^{13}$C-NMR measurement was performed at 200 °C applying an inverse-gated decoupling method, and the proportion of racemo diads (a meso/racemo ratio) was determined. Specifically, for example, for the alicyclic structure-containing resin (A), the proportion of racemo diads was determined based on the intensity ratio of a signal of 43.35 ppm derived from meso diads to a signal of 43.43 ppm derived from racemo diads using a peak of 127.5 ppm of orthodichlorobenzene-d$_4$ as a reference shift.

(4) Glass Transition Temperature and Melting Point of Alicyclic Structure-containing Resins

The alicyclic structure-containing resins (A) and (B) were used as measurement samples. The obtained measurement samples were heated to 320 °C in a nitrogen atmosphere, and then rapidly cooled to room temperature using liquid nitrogen at a cooling rate of -10 °C/min. The temperature was increased at 10 °C/min using a differential scanning calorimeter (DSC) to determine the glass transition temperatures and melting points of the alicyclic structure-containing resins.

(5) Pore Diameter of Non-woven Fabrics

The non-woven fabrics obtained for the alicyclic structure-containing resins (A) and (B) were respectively used as measurement samples. The pore diameter of the measurement samples was calculated by a pore diameter distribution measurement device (Perm-Porometer produced by PMI) using isopropyl alcohol as a measurement liquid in accordance with a bubble point method (ASTM F316-86, JIS K 3832).

(6) Air Permeability of Non-woven Fabrics

The non-woven fabrics obtained for the alicyclic structure-containing resins (A) and (B) were used as measurement samples. The air permeability of the measurement samples was measured using a Gurley densometer (No. 323 AUTO produced by Yasuda Seiki Seisakusho, Ltd.) in accordance with JIS P8117 on 50 mm × 50 mm test pieces cut out from the measurement samples.

(7) Number-average Fiber Diameter of Fibers Constituting Non-woven Fabrics

The non-woven fabrics obtained for the alicyclic structure-containing resin (A) and (B) were used as measurement samples. The number-average fiber diameter of the fibers constituting the non-woven fabrics as the measurement samples was measured by observing arbitrarily selected ten fibers under a digital microscope (VHK-6000 produced by Keyence Corporation).

(8) Collection Rate

The filter samples prepared from the non-woven fabrics obtained for the alicyclic structure-containing resins (A) and (B) were used as measurement samples. The collection rate of the measurement samples was determined as follows.

Each obtained non-woven fabric was cut into a 400 cm × 20 cm piece. This piece was then folded 40 times longitudinally at a pitch of 10 cm in a zigzag fashion to prepare a filter sample, and the filter sample was placed into a cartridge.

As a ceria slurry to flow through the filter, a material obtained by dispersing ceria powder having a number-average particle diameter of 1 μm in water so as to be 0.1 parts by mass was used.

The concentration of ceria in the ceria slurry was measured with a particle size distribution meter (AccuSizer FX-Nano produced by PSS Japan) after the ceria slurry had flown through the filter sample for 20 minutes at a flow rate of 1 L/min, and the collection rate was calculated by:

$$X = (A0 - A)/A0 \times 100,$$

where X (%) represents the collection rate, A0 represents the number of ceria in the initial slurry, and A represents the number of ceria in the slurry after flowing through the filter sample for 20 minutes.

(9) Pressure Loss
The filter samples prepared from the non-woven fabrics obtained for the alicyclic structure-containing resins (A) and (B) were used as measurement samples. The pressure loss of each measurement sample was calculated by measuring the pressure difference before and after the ceria slurry had flown through the corresponding filter sample for 1 minute at a flow rate of 1 L/min. Note that the ceria slurry used was the same as that used in the above section "(8) Collection Rate".
(10) Replacement Interval
The filter samples prepared from the non-woven fabrics obtained for the alicyclic structure-containing resins (A) and (B) were used as measurement samples. The replacement interval of the non-woven fabric in each filter sample as the measurement sample was measured from the time when the ceria slurry started to flow into the filter sample at a flow rate of 1 L/min until the pressure difference reached 50 kPa.

[Production of Alicyclic Structure-containing Resin (A) (Crystalline Alicyclic Structure-containing Resin)]

In a pressure-resistant metal reaction vessel with its inside purged with nitrogen, 154.5 parts of cyclohexane as an organic solvent, 42.8 parts (30 parts as dicyclopentadiene) of a cyclohexane solution (concentration: 70 %) of dicyclopentadiene as dicyclopentadienes (endo isomer content: 99 % or more), and 1.9 parts of 1-hexene as a molecular weight modifier were added, and the whole solution was heated to 53 °C. On the other hand, 0.061 parts of an n-hexane solution (concentration: 19 %) of diethylaluminum ethoxide, which was an organometallic reducing agent as a ring-opening polymerization catalyst, was added to a solution obtained by dissolving 0.014 parts of a tetrachlorotungsten phenylimide(tetrahydrofuran) complex, which was a metal compound as a ring-opening polymerization catalyst, in 0.70 parts of toluene (an organic solvent), and the mixture was stirred for 10 minutes to prepare a ring-opening polymerization catalyst solution. This ring-opening catalyst polymerization was added into the above reaction vessel, where a ring-opening polymerization reaction was carried out at 53 °C for 4 hours to obtain a solution containing a dicyclopentadiene ring-opened polymer.
To 200 parts of the obtained solution containing the dicyclopentadiene ring-opened polymer, 0.037 parts of 1,2-ethanediol was added as a terminator, and the mixture was stirred at 60 °C for 1 hour to stop the polymerization reaction. Then, 1 part of a hydrotalcite-like compound as an adsorbent (product name: "Kyoward® 2000", produced by Kyowa Chemical Industry Co., Ltd.; Kyoward is a registered trademark in Japan, other countries, or both) was added, heated to 60 °C, and stirred for 1 hour. Then, 0.4 parts of a filter aid (product name: "Radiolite® #1500", produced by Showa Chemical Industry Co., Ltd.; Radiolite is a registered trademark in Japan, other countries, or both) was added, and the adsorbent was filtered off using a PP pleated cartridge filter (product name: "TCP-HX", produced by ADVANTEC Toyo Co., Ltd.) to obtain a solution containing a dicyclopentadiene ring-opened polymer.
A portion of this solution was used to measure the molecular weight of the dicyclopentadiene ring-opened polymer, and the weight-average molecular weight (Mw) was determined to be 28,100, the number-average molecular weight (Mn) was 8750, and the molecular weight distribution (Mw/Mn) was 3.21.
To 200 parts of the obtained solution containing the dicyclopentadiene ring-opened polymer (polymer content: 30 parts), 100 parts of cyclohexane and 0.0043 parts of chlorohydridocarbonyltris(triphenylphosphine)ruthenium were added, and a hydrogenation reaction was carried out at a hydrogen pressure of 6 MPa and at 180 °C for 4 hours. The reaction liquid was a slurry in which a solid content was precipitated.
The reaction liquid was centrifuged to separate the solid content and the solution, and the solid content was dried under reduced pressure at 60 °C for 24 hours to obtain 28.5 parts of a hydrogenated dicyclopentadiene ring-opened polymer (an alicyclic structure-containing resin (A)).
The percent hydrogenation of unsaturated bonds in the hydrogenation reaction was determined to be 99 % or more, the glass transition temperature of the hydrogenated dicyclopentadiene ring-opened polymer was 98 °C, and the melting point was 262 °C. In addition, the proportion of racemo diads (a meso/racemo ratio) was 89 %.

[Production of Alicyclic Structure-containing Resin (B) (Amorphous Alicyclic Structure-containing Resin)]

Here, 51 parts of benzylidene(1,3-dimesitylimidazolidine-2-ylidene) (tricyclohexylphosphine)ruthenium dichloride and 79 parts of triphenylphosphine were dissolved in 952 parts of toluene to prepare a catalyst liquid.
Under a nitrogen stream, a monomeric liquid composed of 70 parts of tetracyclo[6.2.1.1$^{3,6}$.0$^{2,7}$]dodeca-4-ene and 30 parts of 2-norbornene, and 0.3 parts of 1-hexene as a chain transfer agent were dissolved in 3000 parts of cyclohexane. To this mixture, 6 parts of the above catalyst liquid was added under stirring, and the resultant mixture was polymerized for 2 hours while being kept at 100 °C. The temperature was returned to room temperature, and the polymerization solution was poured into 12000 parts of 2-propanol to coagulate the polymer. The coagulated polymer was washed with 2-propanol and filtered repeatedly to remove the solvent.

Then, 30 parts of the polymer thus obtained was dissolved in 70 parts of cyclohexane, and 1 part of an alumina-supported nickel catalyst (containing 0.35 parts of nickel and 0.2 parts of nickel oxide per 1 part of the catalyst, and having a pore volume of 0.8 cm$^3$/g and a specific surface area of 300 m$^2$/g) and 2 parts of isopropyl alcohol were added thereto, and the mixture was reacted for 5 hours in an autoclave at 230 °C under a hydrogen pressure of 50 kgf/cm$^2$. After completion of the reaction, the nickel catalyst was removed by microfiltration to 1 ppm or less, and the reaction solution was poured into 500 parts of isopropyl alcohol under stirring to coagulate the cycloolefin polymer. The coagulated polymer was washed with isopropyl alcohol and filtered repeatedly, and then the solvent was removed to a solvent content of 1 ppm to obtain an alicyclic structure-containing resin (B).

The hydrogenation rate (percent hydrogenation) of carbon-carbon unsaturated bonds was nearly 100 %.

Mw of the alicyclic structure-containing resin (B) was determined to be 40000, Mn was 29000, Mw/Mn was 1.38, and Tg was 120 °C. Note that the melt index flow was measured in accordance with ASTM D1238 at a test temperature of 260 °C and a test load of 21.17 N.

Table 1 lists the physical properties of the alicyclic structure-containing resins (A) and (B) obtained as described above.

Table 1

|  | Alicyclic structure-containing resin | |
| --- | --- | --- |
|  | (A) | (B) |
| Molecular weight (Mw) | 28100 (ring-opened polymer) | 40,000 |
| Molecular weight (Mn) | 8750 (ring-opened polymer) | 29,000 |
| Molecular weight distribution | 3.21 (ring-opened polymer) | 1.38 |
| Percent hydrogenation | 99 % or more | nearly 100 % |
| Proportion of racemo dyads | 89% | - |
| Melting point | 262 °C | - |
| Glass transition temperature | 98 °C | 120 °C |

(Example 1)

An alicyclic structure-containing resin (A) was melted in an extruder (trade name: "TEM-35", produced by Toshiba Machine Co., Ltd.) heated to 300 °C, and then shaped into a non-woven fabric using a melt-blowing machine (trade name: "SWMB-T300", produced by Shinwa Industrial Co., Ltd.) having a die with 1500 nozzle holes of 0.15 μm in diameter. Note that the conveyor speed was 50 m/min. Various evaluations were performed on each non-woven fabric thus obtained according to the above-described method. The results are listed in Table 2.

(Example 2)

Non-woven fabrics were prepared in the same manner as in Example 1, except that the heating temperature of the extruder was set at 330 °C instead of 300 °C. Various evaluations were performed on each non-woven fabric thus obtained according to the above-described method. The results are listed in Table 2.

(Comparative Example 1)

Non-woven fabrics were prepared in the same manner as in Example 1, except that an alicyclic structure-containing resin (B) was used and the conveyor speed was set at 10 m/min instead of using the alicyclic structure-containing resin (A) and the conveyor speed of 50 m/min. Various evaluations were performed on each non-woven fabric thus obtained according to the above-described method. The results are listed in Table 2.

(Comparative Example 2)

Non-woven fabrics were prepared in the same manner as in Example 1, except that the heating temperature of the extruder was set at 280 °C instead of 300 °C. Various evaluations were performed on each non-woven fabric thus obtained according to the above-described method. The results are listed in Table 2.

Table 2

| | | Non-woven fabric | | | Filter | | |
|---|---|---|---|---|---|---|---|
| | Material | Pore diameter ($\mu$m) | Air permeability (s/100 mL) | Number average fiber diameter ($\mu$m) | Collection rate (%) | Pressure loss (kPa) | Replacement interval (min) |
| Example 1 | Alicyclic structure-containing resin (A) | 4.5 | 2.1 | 0.82 | 97 | 8.5 | 270 |
| Example 2 | Alicyclic structure-containing resin (A) | 2.7 | 1.5 | 3.8 | 98 | 9.2 | 270 |
| Comparative Example 1 | Alicyclic structure-containing resin (B) | 4.6 | 0.8 | 0.91 | 98 | 31.0 | 60 |
| Comparative Example 2 | Alicyclic structure-containing resin (A) | 6.1 | 2.7 | 2.3 | 77 | 6.9 | 180 |

From Table 2, it can be seen that Examples 1 and 2, each using a non-woven fabric made of fibers containing a crystalline alicyclic structure-containing resin and having a pore diameter as measured by a bubble point method of 5 $\mu$m or less, can provide filters that achieve a high collection rate, low pressure loss, and a long replacement interval of the non-woven fabric in the filter.

In general, when an attempt is made to increase the collection rate of a filter, the pressure loss of the filter tends to increase and the replacement interval of the non-woven fabric in the filter tends to be shortened. However, it can be seen that the filters of Examples 1 and 2, each using a non-woven fabric made of a crystalline alicyclic structure-containing resin (A), make it possible to achieve a high collection rate, low pressure loss, and long-term use. In contrast, with the filter of Comparative Example 1 using a non-woven fabric made of an amorphous alicyclic structure-containing resin (B), it can be seen that when an attempt is made to increase the collection rate, the pressure loss increases and the non-woven fabric needs to be replaced in a short time.

In addition, with the filter of Comparative Example 2 using a non-woven fabric made of a crystalline alicyclic structure-containing resin (A) but having a pore diameter larger than 5 $\mu$m, it can be seen that the collection rate decreases and the non-woven fabric needs to be replaced in a short time.

INDUSTRIAL APPLICABILITY

According to the present disclosure, it is possible to provide a non-woven fabric that can provide a filter capable of achieving a high collection rate, low pressure loss, and long-term use, and a filter comprising the non-woven fabric.

**Claims**

1. A non-woven fabric made of fibers containing a crystalline alicyclic structure-containing resin, wherein

the non-woven fabric has a pore diameter as measured by a bubble point method in accordance with the description of 5 μm or less

2. The non-woven fabric according to claim 1, wherein the crystalline alicyclic structure-containing resin is a hydrogenated dicyclopentadiene ring-opened polymer with stereoregularity.

3. A filter comprising the non-woven fabric as recited in claim 1 or 2.

4. The filter according to claim 3, being a filter for semiconductor device production used in production of semiconductor devices.

**Patentansprüche**

1. Vliesstoff gemacht aus Fasern, die ein Harz mit kristalliner alicyclischer Struktur enthalten, wobei der Vliesstoff einen Porendurchmesser, gemessen mit der Bubble-Point-Methode gemäß der Beschreibung, von 5 μm oder weniger aufweist.

2. Vliesstoff nach Anspruch 1, wobei das kristalline alicyclische Struktur enthaltende Harz ein hydriertes, ringgeöffnetes Dicyclopentadien-Polymer mit Stereoregularität ist.

3. Filter, umfassend den in Anspruch 1 oder 2 genannten Vliesstoff.

4. Filter nach Anspruch 3, der ein Filter für die Herstellung von Halbleiterbauelementen ist und bei der Herstellung von Halbleiterbauelementen verwendet wird.

**Revendications**

1. Textile non tissé réalisé en fibres contenant une résine contenant une structure alicyclique cristalline, dans lequel le textile non tissé a un diamètre de pore tel que mesuré par une méthode de point de bulle conformément à la description inférieur ou égal à 5 μm.

2. Textile non tissé selon la revendication 1, dans laquelle la résine contenant une structure alicyclique cristalline est un polymère de dicyclopentadiène hydrogéné à cycle ouvert avec une stéréorégularité.

3. Filtre comprenant le textile non tissé tel que décrit dans la revendication 1 ou 2.

4. Filtre selon la revendication 3, étant un filtre pour la production de dispositifs à semi-conducteur utilisé dans la production de dispositifs à semi-conducteur.

**EP 3 760 777 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005171404 A
- WO 2012033076 A
- JP 2002249553 A
- JP 2007016102 A